# EUROPEAN PATENT APPLICATION

(11) **EP 4 811 750 A1**
(43) Date of publication of application: **23.09.2026**
(21) Application number: 26165405.7
(22) Date of filing: 17.03.2026
(51) Int. Cl.: H04L 67/12, H04W 4/80

(54) **NETWORK CONFIGURATION METHODS PERFORMED BY USER DEVICE AND BY SPEAKER DEVICE**

(30) Priority: 21.03.2025 CN 202510344711
(71) Applicant: Harman International Industries, Incorporated, Stamford, CT 06901 (US)
(72) Inventor: TANG, Chuanlong, Shenzhen, 518057 (CN); XUE, Baihui, Shenzhen, 518057 (CN); WAN, Yulin, Shenzhen, 518057 (CN)
(74) Representative: Rummler, Felix

(57) **Abstract**

A network configuration method performed by a user device and a network configuration method performed by a speaker device are provided. In this method, a Wi-Fi Direct connection is used for direct communication between speaker devices to form a Wi-Fi Direct group composed of all speaker devices, and a first speaker device is configured in the Wi-Fi Direct group as a group owner (GO) device to perform direct communication with the user device, where the direct communication employs a Bluetooth connection. Based on such a system design, the user device transmits network configuration information via the GO speaker device to other speaker devices for which network setup needs to be performed, for the other speaker devices to connect to a Wi-Fi network based on the network configuration information, thereby implementing a network configuration process for a plurality of speaker devices. The method can significantly improve the speaker network configuration efficiency, while the speaker devices further enjoy the convenience of joining or leaving the Wi-Fi Direct network at any time.

## Description

### Technical Field

The present disclosure relates to the field of communications, and more particularly, to a network configuration method performed by a user device and a network configuration method performed by a speaker device.

### Background

Currently, in smart home and commercial environments, Wi-Fi speakers are becoming increasingly prevalent due to their advantages of convenience and high-quality audio transmission. A user can perform simple configuration on these speakers via a smartphone application (APP) to connect them to a Wi-Fi network in residential or office settings, and then enjoy a smooth music playback experience. However, with an increase in the number of speakers supporting Wi-Fi, the existing network configuration methods are facing significant challenges.

Therefore, an efficient and convenient Wi-Fi speaker configuration method is needed in order to provide users with a better configuration experience.

### Summary of the Invention

Embodiments of the present disclosure provide a network configuration method performed by a user device and a network configuration method performed by a speaker device.

An embodiment of the present disclosure provides a network configuration method performed by a user device, including: establishing a Bluetooth connection with a first speaker device of a plurality of speaker devices, where the first speaker device is connected with each of other speaker devices of the plurality of speaker devices through a Wi-Fi Direct connection; and transmitting Wi-Fi network configuration information to the first speaker device through the Bluetooth connection, where the first speaker device is connected to a Wi-Fi network based on the Wi-Fi network configuration information, and the first speaker device transmits the Wi-Fi network configuration information to one or more other speaker devices of the plurality of speaker devices through the Wi-Fi Direct connection, for the one or more other speaker devices to connect to the Wi-Fi network based on the Wi-Fi network configuration information.

An embodiment of the present disclosure provides a network configuration method performed by a speaker device, including: in response to a connection request from a user device, establishing a Bluetooth connection with the user device, where the first speaker device is connected with one or more speaker devices through a Wi-Fi Direct connection; receiving Wi-Fi network configuration information from the user device through the Bluetooth connection, and connecting to a Wi-Fi network based on the Wi-Fi network configuration information; and transmitting the Wi-Fi network configuration information to at least one speaker device of the one or more speaker devices through the Wi-Fi Direct connection, for the at least one speaker device to connect to the Wi-Fi network based on the Wi-Fi network configuration information.

An embodiment of the present disclosure provides a network configuration apparatus, including corresponding components for performing the network configuration methods as described above.

An embodiment of the present disclosure provides a network configuration device, including: one or more processors; and one or more memories, where the one or more memories have a computer-executable program stored therein, the computer-executable program, when executed by the processors, causing the network configuration method as described above to be executed.

An embodiment of the present disclosure provides a computer-readable storage medium having computer-executable instructions stored thereon, where the instructions, when executed by a processor, cause the network configuration method as described above to be implemented.

An embodiment of the present disclosure provides a computer program product or computer program, where the computer program product or computer program includes computer instructions stored in a computer-readable storage medium. The processor of the computer device reads the computer instructions from the computer-readable storage medium, and the processor executes the computer instructions to cause the computer device to execute the network configuration method according to the embodiments of the present disclosure.

In the method provided in the embodiments of the present disclosure, a Wi-Fi Direct connection is used for direct communication between speaker devices to form a Wi-Fi Direct group composed of all speaker devices, and a first speaker device is configured in the Wi-Fi Direct group as a group owner (GO) device to perform direct communication with the user device, where the direct communication employs a Bluetooth connection. Based on such a system design, the user device transmits network configuration information via the GO speaker device to other speaker devices for which network setup needs to be performed, for the other speaker devices to connect to a Wi-Fi network based on the network configuration information, thereby implementing a network configuration process for a plurality of speaker devices.

By combining Wi-Fi Direct connections and BLE for multi-speaker network configuration, including using Bluetooth connectivity for initial speaker device discovery and pairing between a GO speaker device and a user device, and using Wi-Fi Direct connections to enable a direct connection between speaker devices without the support of a central network infrastructure, the methods provided by the embodiments of the present disclosure implement efficient communication between the user device and the GO speaker device, as well as between the GO speaker device and other speaker devices in the speaker system. This includes implementing synchronization of speaker device information, sharing of network configuration information, and parallel processing of network connections, significantly improving speaker network configuration efficiency. At the same time, speaker devices also enjoy the convenience of joining or leaving the Wi-Fi Direct network at any time. Based on the network configuration method provided by the embodiments of the present disclosure, a user can configure Wi-Fi networks for multiple speaker devices at a time through user device (such as smartphone APP, etc.), which greatly simplifies and accelerates the network configuration process of speaker devices.

### Brief Description of the Drawings

In order to more clearly illustrate the technical solutions of the embodiments of the present disclosure, the drawings required for describing the embodiments are briefly introduced below. Apparently, the accompanying drawings described below are merely some exemplary embodiments of the present disclosure, and other accompanying drawings can further be obtained according to these accompanying drawings by those of ordinary skill in the art without creative labor.
FIG. 1 is a schematic diagram illustrating a scenario of wireless audio playback using a speaker system according to an embodiment of the present disclosure;
FIG. 2 is a flowchart illustrating a network configuration method performed by a user device according to an embodiment of the present disclosure;
FIG. 3 is a flowchart illustrating a network configuration method performed by a speaker device according to an embodiment of the present disclosure;
FIG. 4 is a schematic flowchart illustrating a network configuration method in a first configuration scenario according to an embodiment of the present disclosure;
FIG. 5 is a schematic flowchart illustrating a network configuration method in a second configuration scenario according to an embodiment of the present disclosure;
FIG. 6 is a schematic flowchart illustrating establishment of a Wi-Fi Direct connection between speakers according to an embodiment of the present disclosure;
FIG. 7 is a schematic flowchart illustrating establishment of a Bluetooth connection between a user device and a speaker according to an embodiment of the present disclosure;
FIG. 8 illustrates a schematic diagram of a network configuration device according to an embodiment of the present disclosure; and
FIG. 9 illustrates a schematic diagram of an architecture of an exemplary computing device according to an embodiment of the present disclosure.

### Detailed Description

In order to make the objectives, technical solutions, and advantages of the present disclosure more obvious, example embodiments according to the present disclosure will be described in detail below with reference to the drawings. Apparently, the described embodiments are merely some of the embodiments of the present disclosure, rather than all the embodiments of the present disclosure. It should be understood that the present disclosure is not limited by the example embodiments described herein.

In this specification and the drawings, substantially the same or similar steps and elements are denoted by the same or similar reference numerals, and duplicated description of these steps and elements will be omitted. Meanwhile, in the description of the present disclosure, terms "first", "second", and the like are used only for distinguishing description and cannot be understood as indicating or implying relative importance or ordering.

In the embodiments of the present disclosure, the term "module" or "unit" refers to a computer program or a segment of a computer program that has a predetermined function and works together with other related parts to achieve a predetermined goal, and can be implemented entirely or in part by using software, hardware (such as a processing circuit or memory), or a combination thereof. Likewise, one processor (or a plurality of processors or memories) can be used for implementing one or more modules or units. Further, each module or unit may be a part of an integral module or unit that includes the function of the module or unit.

Unless otherwise defined, all technical and scientific terms used herein have the same meanings as commonly understood by those skilled in the technical field to which the present disclosure belongs. The terms used herein are for the purpose of describing embodiments of the present invention only and are not intended to limit the present invention.

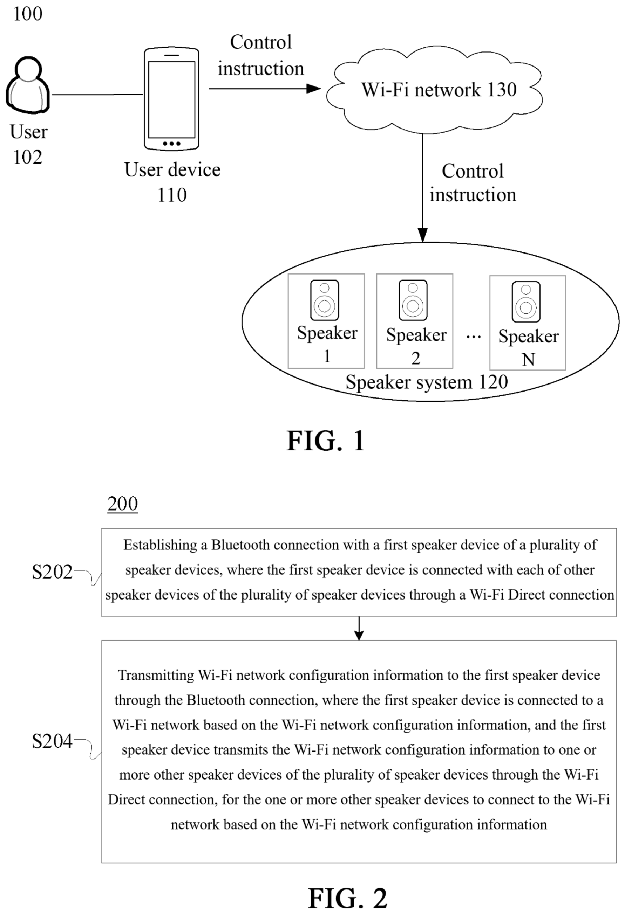

FIG. 1 is a schematic diagram illustrating a scenario of wireless audio playback using a speaker system according to an embodiment of the present disclosure.

In current smart home and commercial environments, the demand for wireless audio playback is constantly increasing, and Wi-Fi speakers supporting Wi-Fi functions are becoming increasingly popular due to their convenience and high-quality audio transmission. As shown in FIG. 1, a user 102 may interact with a speaker system 120 via a user device 110, where the speaker system 120 may include a plurality of Wi-Fi speaker devices (e.g., Speaker 1, Speaker 2, ..., and Speaker N). For example, the user may conveniently configure and manage settings of the speaker devices, select playlists, control volume, and achieve other functions through a mobile phone application. The user device 110 and the speaker system 120 may be commonly connected to the same Wi-Fi network 130 (e.g., a home or office Wi-Fi network, etc.), enabling the user 102 to use the user device 110 to transmit control instructions to the speaker system 120 via the Wi-Fi network 130, so as to control the speakers. Optionally, the user device 110 may specifically include a smartphone, a tablet computer, a laptop portable computer, a desktop computer, a vehicle-mounted terminal, a wearable device, etc., but is not limited thereto. The user terminal may also be a client with a browser or various applications (including system applications and third-party applications) installed thereon.

As described above, this multi-speaker configuration of the speaker system can allow a user to create stereo sound effects or perform zoned playback in the same room or multiple rooms, achieving a seamless music experience. However, as the number of Wi-Fi speakers in the speaker system increases, the existing network configuration methods for these speakers are facing severe challenges.

Traditionally, the network configuration process of most Wi-Fi speakers relies on Bluetooth Low Energy (BLE) technology, which is used to establish a connection between the speaker device and a smartphone application to set various parameters required for the speaker device to connect to the Wi-Fi network. BLE technology is widely adopted in the initial setup process of various devices due to its low power consumption characteristics. However, a key bottleneck of BLE technology in speaker network configuration lies in its connection performance. Although BLE technology is suitable for quick pairing and setup of a single device, its efficiency decreases significantly when configuring multiple devices simultaneously. When a small number (e.g., one or two) of Wi-Fi speakers need to be configured, using BLE technology may not cause obvious problems. However, when network connections for more speakers need to be established simultaneously, the process becomes cumbersome and time-consuming. This is because BLE technology is designed to establish a stable connection with only one device at a time. Therefore, in a multi-device scenario, a user needs to repeatedly switch connections between different devices to complete the Wi-Fi setup for each speaker consecutively. This configuration method is not only inefficient but also significantly degrades the user experience, especially in situations where multiple speaker devices need to be quickly configured to achieve synchronized music playback or other integrated applications.

Therefore, a new multi-speaker Wi-Fi configuration method is needed, which should be able to overcome the bottleneck of BLE technology in a multi-speaker device configuration environment, thereby providing a more efficient and user-friendly method to set up network connections for multiple Wi-Fi speakers.

Based on this, the present disclosure provides a fast network configuration method for a speaker system. In this method, a Wi-Fi Direct connection is used for direct communication between speaker devices to form a Wi-Fi Direct group composed of all speaker devices, and a first speaker device is configured in the Wi-Fi Direct group as a group owner (GO) device to perform direct communication with the user device, where the direct communication employs a Bluetooth connection. Based on such a system design, the user device transmits network configuration information via the GO speaker device to other speaker devices for which network setup needs to be performed, for the other speaker devices to connect to a Wi-Fi network based on the network configuration information, thereby implementing a network configuration process for a plurality of speaker devices.

By combining Wi-Fi Direct and BLE for multi-speaker network configuration, including using Bluetooth connectivity for initial speaker device discovery and pairing between a GO speaker device and a user device, and using Wi-Fi Direct to enable a direct connection between speaker devices without the support of a central network infrastructure, efficient communication between the user device and the GO speaker device, as well as between the GO speaker device and other speaker devices in the speaker system can be implemented. This includes implementing synchronization of speaker device information, sharing of network configuration information, and parallel processing of network connections, significantly improving speaker network configuration efficiency. At the same time, speaker devices also enjoy the convenience of joining or leaving the Wi-Fi Direct network at any time. Based on the network configuration methods of the present disclosure, a user can configure Wi-Fi networks for multiple speaker devices at a time through a user device (e.g., a smartphone APP, etc.), which greatly simplifies and accelerates the network configuration process of speaker devices.

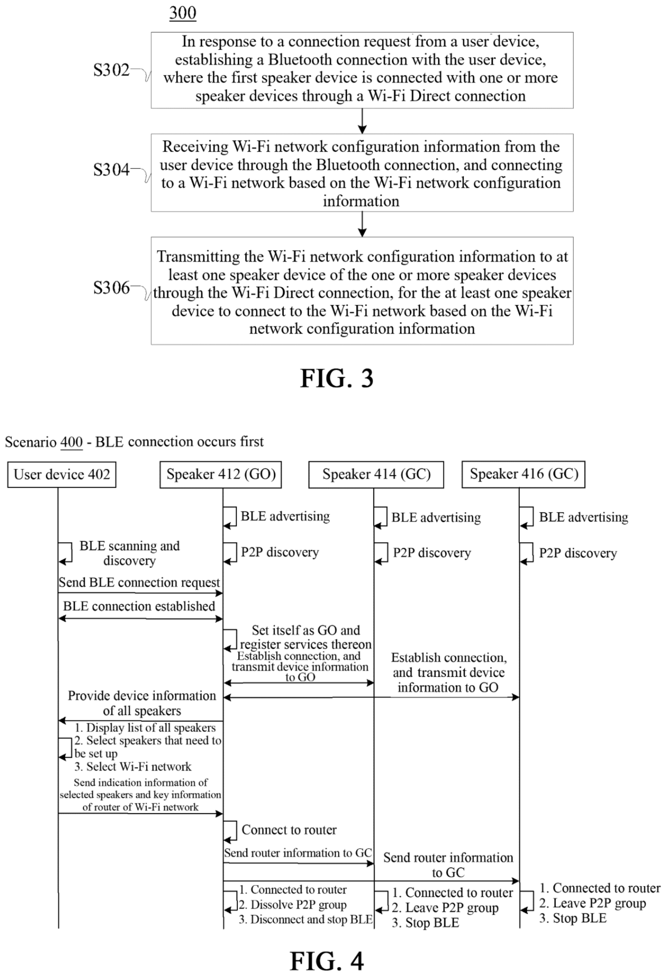

FIG. 2 is a flowchart illustrating a network configuration method 200 performed by a user device according to an embodiment of the present disclosure. FIG. 3 is a flowchart illustrating a network configuration method 300 performed by a speaker device according to an embodiment of the present disclosure.

As described above, the network configuration methods of the present disclosure may be implemented jointly by a user device and a speaker device. Therefore, the network configuration methods of the present disclosure will be introduced below from the perspective of corresponding operations on the user device side and the speaker device side.

First, as shown in FIG. 2, it illustrates operations performed on the user device side, including steps S202 and S204. As shown in FIG. 3, it illustrates operations performed on the speaker device side, including steps S302, S304, and S306.

Specifically, in step S202, the user device may establish a Bluetooth connection with a first speaker device of a plurality of speaker devices, where the first speaker device may be connected with each of other speaker devices of the plurality of speaker devices through a Wi-Fi Direct connection.

Optionally, the aforementioned plurality of speaker devices may be speaker devices supporting Wi-Fi Direct, which may be connected via a Wi-Fi Direct network to form a peer-to-peer (P2P) group structure including a group owner (GO) device serving as the center and a plurality of group client (GC) devices. Herein, the first speaker device may serve as the GO device in the Wi-Fi Direct network, and be responsible for establishing and maintaining the network, managing device connection requests, and handling network security and data transmission settings, while the other speaker devices of the plurality of speaker devices may serve as GC devices in the Wi-Fi Direct network, i.e., devices joining the network created by the GO device.

Optionally, in the system of the present disclosure, a Bluetooth connection may be established between the user device and the first speaker device that serves as the GO device in the Wi-Fi Direct network. For example, the user may use Bluetooth (e.g., by way of example but not limitation, Bluetooth Low Energy (BLE)) technology to establish a connection with the speaker device via a user device (e.g., an application (APP) on a smartphone). By virtue of its advantage of low power consumption, the Bluetooth connection facilitates discovery of and connection with the speaker device by the user device. Specifically, in a case where the speaker device and the user device support BLE technology, taking the establishment of a BLE connection between the user device and the first speaker device as an example, the BLE advertising of the speaker device may be integrated into the discovery, connection, and data interaction processes between the user device and the speaker device, which will be introduced below.

Considering that Wi-Fi Direct technology allows direct communication between devices bypassing a central network infrastructure, and that there are multiple implementation methods for the Wi-Fi Direct group formation process, each method having its unique characteristics and applicable scenarios, the present disclosure will determine therefrom a Wi-Fi Direct group formation method to be applied in the network configuration methods of the present disclosure.

Optionally, the connection speed and the group formation efficiency may be taken as key measurement factors for selecting the Wi-Fi Direct group formation method. Wi-Fi Direct group formation may include three common methods, for example, standard group formation, autonomous group owner mode, and persistent group method. Among them, standard group formation relies on discovery and negotiation between devices to automatically select the GO. This method offers the highest flexibility and can perform dynamic adjustment based on device capabilities and network conditions, but its connection speed is relatively slow, making it suitable for general scenarios with low connection speed requirements. The autonomous group owner mode pre-designates or actively announces a GO device, omitting the negotiation process, thereby significantly improving the connection speed. This mode is particularly suitable for scenarios with fixed configurations and requiring fast connection establishment, for example, when devices need to share data immediately. The persistent group allows devices to store group configuration information, enabling quick reconnection and avoiding repeated negotiation. This mode is suitable for devices requiring frequent re-connections, such as smart home devices, and can greatly enhance the user experience. The aforementioned three group formation methods each have different focuses. For example, standard group formation provides maximum flexibility but a lower connection speed; and the autonomous mode and the persistent group provide higher connection speeds, which are especially suitable for scenarios requiring fast connection establishment. Therefore, in applications of the present disclosure having high connection speed requirements, the autonomous group owner mode is a preferred choice. That is to say, in the network configuration methods of the present disclosure, the autonomous group owner mode may be adopted to select a GO device in a specific manner without negotiation with other speaker devices, which will be introduced below.

Correspondingly, in step S302, in response to a connection request from a user device, the speaker device may establish a Bluetooth connection with the user device, where the first speaker device may be connected with one or more speaker devices through a Wi-Fi Direct connection.

That is, in order to achieve fast network configuration between the user device and the speaker devices, the present disclosure may transform the traditional one-to-one network configuration method, where a user device, based on BLE connection, sequentially and individually completes Wi-Fi setup for each speaker device by repeatedly switching connections between different devices, into a hierarchical network configuration from the user device to the GO device, and from the GO device to each of the GC devices for which network setup needs to be performed. This can solve the problem of low network configuration efficiency caused by the connection limitation of BLE technology while utilizing the low power consumption characteristics of BLE technology. Specifically, by using the Wi-Fi Direct network to perform configuration information synchronization from the GO device to multiple GC devices, parallel network configuration for multiple GC devices can be achieved, thereby significantly improving the configuration efficiency.

In step S204, Wi-Fi network configuration information may be transmitted to the first speaker device through the Bluetooth connection, where the first speaker device is connected to a Wi-Fi network based on the Wi-Fi network configuration information, and the first speaker device transmits the Wi-Fi network configuration information to one or more other speaker devices of the plurality of speaker devices through the Wi-Fi Direct connection, for the one or more other speaker devices to connect to the Wi-Fi network based on the Wi-Fi network configuration information.

Optionally, the GO device may be used as an information relay to pass the Wi-Fi network configuration information received from the user device to the GC devices, thereby achieving fast Wi-Fi network configuration for the GC devices within the group.

Correspondingly, for the speaker device, in step S304, the speaker device may receive Wi-Fi network configuration information from the user device through the Bluetooth connection, and connect to a Wi-Fi network based on the Wi-Fi network configuration information.

Specifically, after receiving the Wi-Fi configuration information, the GO device may immediately use this information to connect to the Wi-Fi network specified by the Wi-Fi network configuration information.

Correspondingly, for the speaker device, in step S306, the speaker device may transmit the Wi-Fi network configuration information to at least one speaker device of the one or more speaker devices through the Wi-Fi Direct connection, for the at least one speaker device to connect to the Wi-Fi network based on the Wi-Fi network configuration information.

Further, as the center of the Wi-Fi Direct network, the GO device may also be responsible for managing and maintaining network connections. After successfully connecting to the Wi-Fi network, the GO device may advertise or directionally transmit the received Wi-Fi network configuration information through the Wi-Fi Direct connection to each GC device for which network setup needs to be performed. Therefore, the GC devices do not need to establish separate connections with the user device, but can directly acquire the configuration information from the GO device.

After the GC devices receive the Wi-Fi network configuration information from the GO device, they may immediately use this information to connect to the specified Wi-Fi network. Through this parallel configuration approach, multiple GC devices can complete the connection to the Wi-Fi network simultaneously, thereby greatly improving the configuration efficiency.

By combining Bluetooth and Wi-Fi Direct technologies, the network configuration methods of the present disclosure can solve the efficiency bottleneck of traditional one-to-one configuration, where Bluetooth is used to establish a fast connection between the user device and the speaker device, and Wi-Fi Direct is used to achieve fast sharing and parallel configuration of configuration information among the speaker devices. Based on this, the user device only needs to configure the GO device, and the GO device then passes the information to other GC devices, which realizes a hierarchical network configuration from the user device to the GO device, and then from the GO device to multiple GC devices, thereby significantly improving the Wi-Fi network configuration efficiency of the speaker device cluster. This distributed configuration solution not only significantly enhances the user experience, but also provides an effective solution for fast network deployment of large-scale speaker devices.

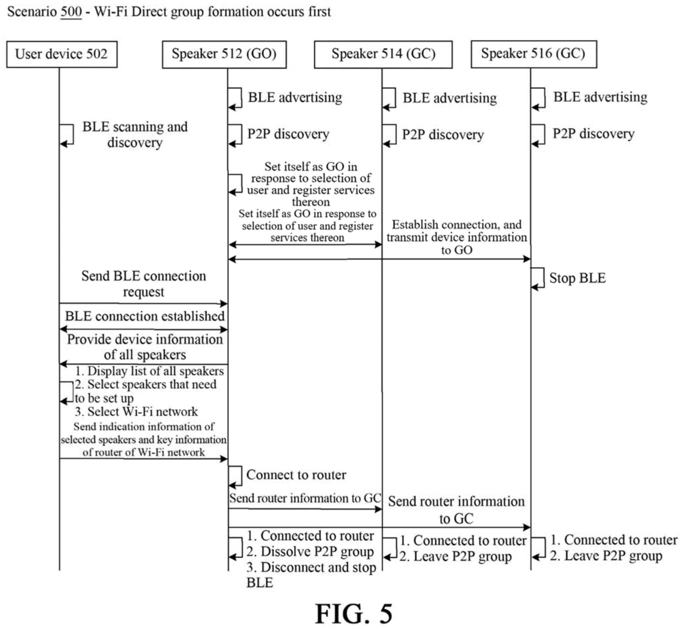

Considering that the sequence of establishing the Bluetooth connection between the user device and the speaker device and establishing the Wi-Fi Direct connection between the speaker devices will affect the specific implementation of the aforementioned steps of the network configuration methods of the present disclosure, the network configuration methods of the present disclosure will be further introduced below by setting different scenarios according to different sequences of establishing these two connections. Specifically, FIG. 4 is a schematic flowchart illustrating a network configuration method in a first configuration scenario according to an embodiment of the present disclosure. FIG. 5 is a schematic flowchart illustrating a network configuration method in a second configuration scenario according to an embodiment of the present disclosure. Herein, FIG. 4 corresponds to a scenario 400 where the establishment of the Bluetooth connection between the user device and the speaker device occurs before the establishment of the Wi-Fi Direct connection between the speaker devices, while FIG. 5 corresponds to a scenario 500 where the establishment of the Wi-Fi Direct connection between the speaker devices occurs before the establishment of the Bluetooth connection between the user device and the speaker device. It should be noted that, by way of example and not limitation, only three speaker devices are schematically shown in FIG. 4 and FIG. 5. Those skilled in the art can understand that actual application scenarios may include a smaller or greater number of speaker devices, and embodiments of the present disclosure do not impose specific limitations thereon.

For the scenario 400, it includes a user device 402 and speakers 412, 414, and 416. Herein, the user device 402 may be specifically, for example, a specific smartphone APP, for a user to start the network configuration process through the APP to connect to and configure the speaker devices.

First, in the scenario 400, a plurality of speaker devices (speakers 412, 414, and 416) may enter a BLE advertising mode after being powered on, advertising their connectable status, enabling other devices to capture this information. Correspondingly, the user device 402 may start the BLE mode to begin device scanning and discovery. At this time, the user APP may transmit a BLE scan request to search for connectable BLE speaker devices in the vicinity. When the user device discovers a target speaker, it may create a BLE connection request and transmit the BLE connection request to the target speaker to seek to establish a connection with the speaker device. After the target speaker receives the BLE connection request, it may respond and establish a BLE connection with the user device.

Optionally, in the scenario 400, the user device 402 may establish a BLE connection with any speaker device of the plurality of speakers, which may depend, for example, on the scanning result of the speaker devices by the user device 402 in the BLE mode (e.g., the first discovered speaker device), and the present disclosure does not impose limitations thereon.

According to an embodiment of the present disclosure, in response to the first speaker device establishing the Bluetooth connection with the user device, the first speaker device enters a group owner mode and establishes the Wi-Fi Direct connection with each of the other speaker devices.

Optionally, after the user device 402 successfully connects with, for example, the speaker 412, the speaker 412 may be designated as a GO device, at which time it may enter a GO mode to prepare for subsequent GC device connections.

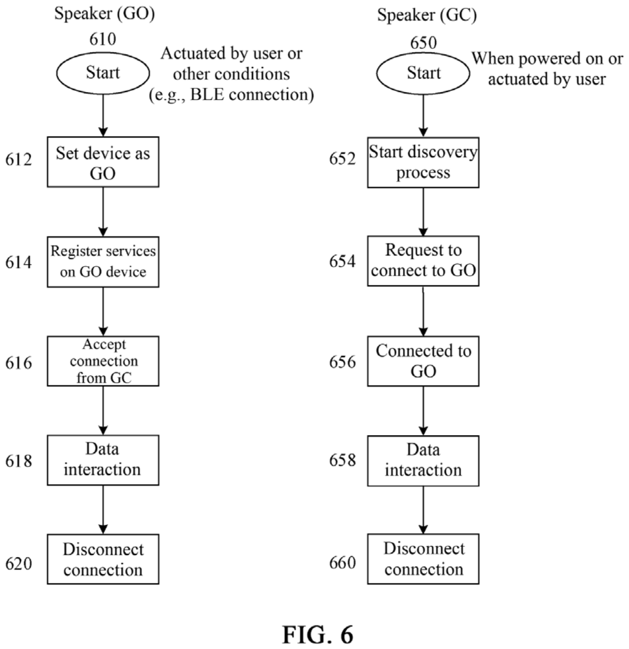

FIG. 6 is a schematic flowchart illustrating establishment of a Wi-Fi Direct connection between speakers according to an embodiment of the present disclosure. According to an embodiment of the present disclosure, the first speaker device may establish the Wi-Fi Direct connection with the one or more speaker devices by: registering one or more services for the one or more speaker devices to find the first speaker device through a service discovery process; receiving connection requests from the one or more speaker devices through the service discovery process; and establishing the Wi-Fi Direct connection with the one or more speaker devices in response to the connection requests.

FIG. 6 takes the Wi-Fi Direct connection between a GO device (speaker (GO)) 610 and a GC device (speaker (GC)) 650 as an example to introduce the process of establishing a Wi-Fi Direct connection between speaker devices, where the GC device 650 may correspond to any GC device in FIG. 4. As shown in FIG. 6, in an initial state, all speaker devices may be set to a GC mode. In step 612, the GO device 610 may be actuated by a user or other conditions to set itself as a GO device and enter a GO mode, so that the GO device 610 can accept connection requests and manage all speaker devices connected to the GO device 610. Correspondingly, other speaker devices may be set as GC devices. Next, in step 614, after successfully entering the GO mode, the GO device 610 may actively register one or more services, thereby allowing other devices (GC devices) to find these services through a service discovery mechanism.

Correspondingly, in step 652, the GC device 650 may start a service discovery process according to the state of the device (e.g., by powering on or being actuated by the user, etc.) to find nearby GO devices and services provided by them. Through the service discovery mechanism, the GC device can identify and access the services provided by the GO. Therefore, during the service discovery process, once the GC device 650 discovers a service provided by the GO device 610, it may request to connect to the GO device 610 based on the discovered service information in step 654.

Therefore, the GO device 610 may accept the connection request from the GC device 650 in step 616, thereby establishing a Wi-Fi Direct connection with the GC device 650. Correspondingly, the GC device 650 may complete the Wi-Fi Direct connection with the GO device 610 in step 656.

After the Wi-Fi Direct connection is established, the GO device 610 and the GC device 650 may perform data interaction in steps 618 and 658, and may disconnect the connection in steps 620 and 660 as needed. If a connection is needed again, the aforementioned process may be repeated.

Through the aforementioned process, returning to FIG. 4, the speaker 412 may set itself as a GO device after establishing a BLE connection with the user device 402, and register a service thereon, thereby establishing Wi-Fi Direct connections with other speaker devices (speakers 414 and 416).

According to an embodiment of the present disclosure, the network configuration method performed by the speaker device may further include: receiving device information of the one or more speaker devices from the one or more speaker devices through the Wi-Fi Direct connection; and transmitting the device information of the one or more speaker devices to the user device through the Bluetooth connection.

Optionally, through the Wi-Fi Direct connection between the speakers, the GO device may receive device information (e.g., device ID and device name, etc.) of each GC device from the other GC devices, and further, the GO device may use the BLE connection to transmit device information of itself and all GC devices in its group to the user device 402, ensuring that the user can be aware of all available speaker devices.

According to an embodiment of the present disclosure, the network configuration method performed by the user device may further include: receiving device information of the plurality of speaker devices from the first speaker device through the Bluetooth connection, where the device information of the plurality of speaker devices includes device information received by the first speaker device from the other speaker devices of the plurality of speaker devices through the Wi-Fi Direct connection; and selecting, by a user, the one or more other speaker devices from the plurality of speaker devices for network setup based on the device information of the plurality of speaker devices, where the Wi-Fi network configuration information includes indication information of the one or more other speaker devices and key information of a router associated with the Wi-Fi network.

Optionally, after the user device 402 receives device information of available speaker devices from the GO device, it may display a list of all available speaker devices (e.g., speakers 412, 414, and 416) on its user interface, and then one or more speaker devices for which Wi-Fi network configuration is to be performed may be selected from these speaker devices. For example, the user may select some or all of the available speaker devices for network configuration. In addition, the user may also select a Wi-Fi network to which these speaker devices are to be connected.

Optionally, based on the aforementioned selection, the user device 402 may transmit, to the GO device, indication information of the selected speaker devices (e.g., device IDs of the speaker devices, etc.) and configuration information of the Wi-Fi network to which these speaker devices are to be connected (e.g., key information of a router associated with the Wi-Fi network (such as SSID, password, etc.), etc.).

Optionally, in response to receiving the Wi-Fi network configuration information, the GO device (speaker 412) may acquire all information required to connect to the Wi-Fi network, and perform network configuration based thereon to connect to a corresponding router.

Optionally, after the GO device (speaker 412) connects to the Wi-Fi network (or in other words, connects to the router), the GO device (speaker 412) may transmit the Wi-Fi network configuration information (e.g., more specifically, the key information of the router) in parallel to the speaker devices indicated in the Wi-Fi network configuration information, i.e., the one or more speaker devices for which Wi-Fi network configuration is to be performed.

Optionally, after receiving the Wi-Fi network configuration information, each speaker device for which Wi-Fi network configuration is to be performed may locally connect to a corresponding router based on the router information in the Wi-Fi network configuration information, so as to connect to the Wi-Fi network specified by the user, thereby completing the network configuration.

According to an embodiment of the present disclosure, the network configuration method performed by the speaker device may further include: when any speaker device of the one or more speaker devices has connected to the Wi-Fi network, disconnecting the Wi-Fi Direct connection with the speaker device.

Optionally, after a speaker device for which network configuration is to be performed successfully connects to the Wi-Fi network, the GO device (speaker 412) may disconnect the Wi-Fi Direct connection with the speaker device, and the speaker device may leave the previously established P2P group, because the speaker device can maintain long-term stable communication with the GO device through the connected Wi-Fi network, and no longer needs the Wi-Fi Direct connection.

According to an embodiment of the present disclosure, any speaker device of the one or more speaker devices stops Bluetooth advertising after being connected to the Wi-Fi network.

Optionally, once all speakers for which network configuration is to be performed have successfully connected to the Wi-Fi network, the GO device (speaker 412) may dissolve the previously established P2P group, actively disconnect the BLE connection with the user device 402 and stop BLE advertising, and other speakers may also stop BLE advertising to maintain long-term stable communication through the Wi-Fi network connection.

Through the process described above with reference to FIG. 4, fast Wi-Fi network configuration of multiple speaker devices can be achieved in a scenario where the establishment of the Bluetooth connection between the user device and the speaker device occurs before the establishment of the Wi-Fi Direct connection between the speaker devices.

For the scenario 500 where the establishment of the Wi-Fi Direct connection between the speaker devices occurs before the establishment of the Bluetooth connection between the user device and the speaker device, it includes a user device 502 and speakers 512, 514, and 516. Herein, the user device 502 may be specifically, for example, a specific smartphone APP, for a user to start the network configuration process through the APP to connect to and configure the speaker devices.

First, in the scenario 500, a plurality of speaker devices (speakers 512, 514, and 516) may enter a BLE advertising mode after being powered on, advertising their connectable status, enabling other devices to capture this information. Correspondingly, the user device 402 may start the BLE mode to begin device scanning and discovery.

At this time, different from the aforementioned scenario 400, a specific speaker device of the plurality of speaker devices may be set as a GO device and enter a GO mode before any one of the speaker devices establishes a Bluetooth connection with the user device.

According to an embodiment of the present disclosure, prior to establishing the Bluetooth connection with the user device, the first speaker device enters a group owner mode in response to the first speaker device being preset, actively announcing, or being selected by the user device as a group owner, and establishes the Wi-Fi Direct connection with each of the other speaker devices.

Optionally, the first speaker device (e.g., speaker 512 in FIG. 5) may be predetermined as a GO device, for example, by presetting the speaker device, by the speaker device actively announcing itself, or by the user selecting the speaker device as a GO device through a specific manner.

According to an embodiment of the present disclosure, the selection of the first speaker device as the Group Owner by the user device is based on actuation of a button on the first speaker device by a user.

Optionally, the aforementioned specific manner may be actuated by a specific button pre-arranged on the speaker device. For example, a combination button or other buttons may be pre-arranged on the speaker device, for the user to set the speaker device as a GO device by actuating the button. Of course, other manners may also be used to configure a speaker device as a GO device, and the present disclosure does not impose limitations thereon.

Optionally, after the speaker device is set as a GO device and enters the GO mode, the GO device may establish Wi-Fi Direct connections with other speaker devices. For example, the Wi-Fi Direct connection process may be as shown above with reference to FIG. 6, and will not be described in detail herein in the present disclosure.

As shown in FIG. 5, taking the user actively selecting the GO device as an example, it illustrates that the speaker 512 sets itself as a GO device based on the selection of the user, registers a service thereon to establish Wi-Fi Direct connections with other GC devices (speakers 514 and 516), and receives corresponding device information from each GC device through the Wi-Fi Direct connection.

According to an embodiment of the present disclosure, any speaker device of the one or more speaker devices stops Bluetooth advertising after establishing the Wi-Fi Direct connection with the first speaker device.

Optionally, to avoid the situation where the user device is connected to a GC device instead of the GO device when performing scan and discovery in the BLE mode, in an embodiment of the present disclosure, each GC device may immediately stop BLE advertising after connecting to the GO device, so as to retain only the BLE advertising of the GO device, thereby ensuring that the GO device can be connected to the user device via BLE.

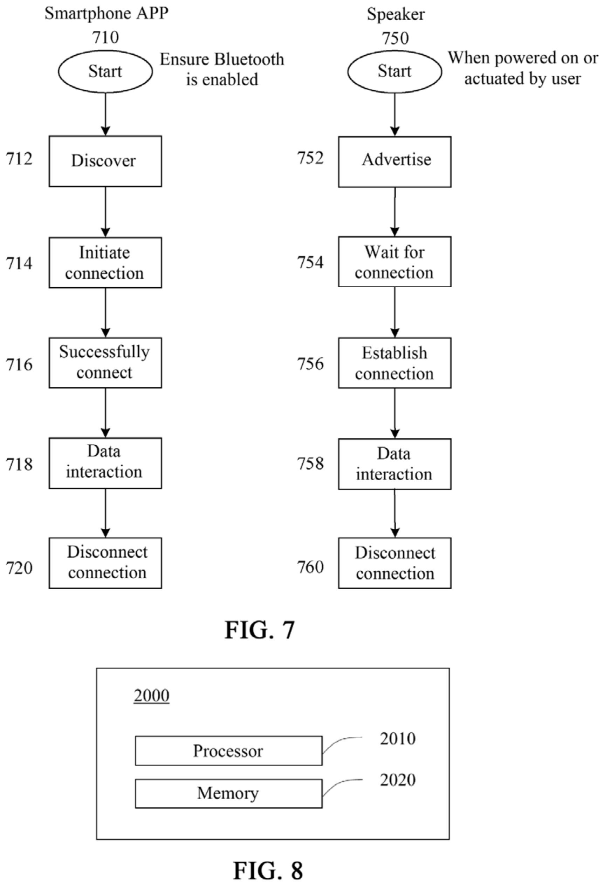

Optionally, in the scenario 500, the user device 502 may establish a BLE connection with the GO device. FIG. 7 is a schematic flowchart illustrating establishment of a Bluetooth connection between a user device and a speaker according to an embodiment of the present disclosure.

As shown in FIG. 7, taking a smartphone APP as an example, when a user starts the smartphone APP 710, the system may check whether the BLE function is enabled. If the BLE function is not enabled, a prompt may be given to the user to ensure that the Bluetooth function is enabled.

Optionally, the speaker device may be activated in response to power-on or being actuated by a user, etc., and enter a Bluetooth advertising mode, as shown in step 752, to announce its presence to nearby BLE-enabled devices, and enter a waiting state, preparing to receive connection requests from other devices, thereby ensuring visibility between the devices, as shown in step 754. For example, the speaker device may advertise information including, for example, the speaker's name, UUIDs of its services and characteristics, and possibly other metadata (such as device type or functions), so as to ensure that the smartphone APP can identify the device.

Optionally, after the smartphone APP 710 enables the Bluetooth function, it may enter a service discovery phase and start searching for surrounding BLE devices, including BLE speakers. For example, the smartphone APP 710 may issue a scan request and listen for advertisement from nearby BLE devices.

Optionally, the smartphone APP 710 may discover a BLE speaker through the scanning process and retrieve its advertisement information, identifying it as a target device based on the advertisement information. For example, in scenario 500, the target speaker device may be identified based on comparing identity information of a pre-selected GO device with advertisement information of each BLE speaker device.

Optionally, after determining the target speaker device, the smartphone APP 710 may initiate a connection request to the target speaker device (e.g., the speaker 750), as shown in step 714.

Optionally, after receiving the connection request, the speaker 750 may perform verification and response. If the connection request is accepted, the speaker 750 may establish a BLE connection with the smartphone APP 710, and the smartphone APP 710 may determine that the connection is successful based on a received confirmation signal, as shown in steps 716 and 756.

Next, the smartphone APP 710 may start data interaction with the speaker 750, as shown in steps 718 and 758. For example, a user may control operations of the speaker device through the smartphone APP, such as setting Wi-Fi information (such as SSID and password, etc.), adjusting volume, playing and pausing music, etc.

Optionally, after all data interaction is completed, the smartphone APP or the speaker device may actively initiate a disconnection operation, as shown in steps 720 and 760, to release resources and close the BLE connection. For example, the user may choose to manually disconnect, or the system may automatically disconnect after task completion, so as to maintain normal operation and responsiveness of the device.

Based on this, the Wi-Fi Direct connection between the speaker devices and the BLE connection between the user device and the GO device can be completed.

Next, the GO device (speaker 512) may use the BLE connection to transmit device information of itself and all GC devices in its group to the user device 502, ensuring that the user can be aware of all available speaker devices.

Optionally, after the user device 502 receives device information of available speaker devices from the GO device (speaker 512), it may display a list of all available speaker devices (e.g., speakers 512, 514, and 516) on its user interface, and then one or more speaker devices for which Wi-Fi network configuration is to be performed may be selected from these speaker devices. For example, the user may select some or all of the available speaker devices for network configuration. In addition, the user may also select a Wi-Fi network to which these speaker devices are to be connected.

Optionally, based on the aforementioned selection, the user device 502 may transmit, to the GO device (speaker 512), indication information of the selected speaker devices (e.g., device IDs of the speaker devices, etc.) and configuration information of the Wi-Fi network to which these speaker devices are to be connected (e.g., key information of a router associated with the Wi-Fi network (such as SSID, password, etc.), etc.).

Optionally, in response to receiving the Wi-Fi network configuration information, the GO device (speaker 512) may acquire all information required to connect to the Wi-Fi network, and perform network configuration based thereon to connect to a corresponding router.

Optionally, after the GO device (speaker 512) connects to the Wi-Fi network (or in other words, connects to the router), the GO device (speaker 512) may transmit the Wi-Fi network configuration information (e.g., more specifically, the key information of the router) in parallel to the speaker devices indicated in the Wi-Fi network configuration information, i.e., the one or more speaker devices for which Wi-Fi network configuration is to be performed.

Optionally, after receiving the Wi-Fi network configuration information, each speaker device for which Wi-Fi network configuration is to be performed may locally connect to a corresponding router based on the router information in the Wi-Fi network configuration information, so as to connect to the Wi-Fi network specified by the user, thereby completing the network configuration.

Optionally, after a speaker device for which network configuration is to be performed successfully connects to the Wi-Fi network, the GO device (speaker 512) may disconnect the Wi-Fi Direct connection with the speaker device, and the speaker device may leave the previously established P2P group, because the speaker device can maintain long-term stable communication with the GO device through the connected Wi-Fi network, and no longer needs the Wi-Fi Direct connection.

Optionally, once all speakers for which network configuration is to be performed have successfully connected to the Wi-Fi network, the GO device (speaker 512) may dissolve the previously established P2P group, actively disconnect the BLE connection with the user device 502 and stop BLE advertising.

Through the process described above with reference to FIG. 5, fast Wi-Fi network configuration of multiple speaker devices can be achieved in a scenario where the establishment of the Wi-Fi Direct connection between the speaker devices occurs before the establishment of the Bluetooth connection between the user device and the speaker device.

The specific implementations of the network configuration methods of the present disclosure have been described above with reference to two scenarios, aiming to optimize the network configuration process under different conditions and ensure the flexibility and convenience of user operations. Herein, the user may use Bluetooth (e.g., by way of example but not limitation, Bluetooth Low Energy (BLE)) technology to establish a connection with the GO device using BLE technology via a user device (e.g., an application (APP) on a smartphone). Once connected, the user device can access information from all GC devices. Then, the user can set up Wi-Fi networks for multiple speaker devices simultaneously. For example, the user can conveniently input Wi-Fi information (such as Wi-Fi SSID and password, etc.) into the smartphone APP, where this information may be transmitted by the smartphone APP to the GO device, and then the GO device synchronizes key network configuration details therein with all GC devices for which network configuration needs to be performed. Since Wi-Fi Direct supports direct communication between devices, this information synchronization can be completed almost in real time, thereby achieving fast and effective parallel network connection configuration. The network configuration methods of the present disclosure, by combining Wi-Fi Direct and BLE, effectively solve the inefficiency problem associated with configuring networks for multiple speaker devices through point-to-point connections via BLE. They not only optimize the user experience and reduce configuration time, but also provide an efficient and feasible solution for multi-device configuration scenarios in smart home and commercial environments (especially multi-channel setup scenarios based on an audio system composed of multiple speakers).

According to yet another aspect of the present disclosure, a network configuration apparatus (not shown) is also provided. According to an embodiment of the present disclosure, the network configuration apparatus may include various components for performing the network configuration method described above.

According to yet another aspect of the present disclosure, a network configuration device is also provided. FIG. 8 illustrates a schematic diagram of a network configuration device 2000 according to an embodiment of the present disclosure.

As shown in FIG. 8, the network configuration device 2000 may include one or more processors 2010, and one or more memories 2020. The memories 2020 have computer-readable code stored therein, where the computer-readable code, when executed by the one or more processors 2010, can cause the network configuration method as described above to be performed.

The processor in the embodiments of the present disclosure may be an integrated circuit chip having a signal processing capability. The aforementioned processor may be a general-purpose processor, a digital signal processor (DSP), an application-specific integrated circuit (ASIC), a field-programmable gate array (FPGA), or other programmable logic devices, discrete gates or transistor logic devices, or discrete hardware assemblies. It can implement or execute the methods, steps, and logic block diagrams disclosed in the embodiments of the present application. The general-purpose processor may be a microprocessor, or the processor may alternatively be any conventional processor, or the like, which may be based on an X86 architecture or an ARM architecture.

In general, various example embodiments of the present disclosure may be implemented in hardware or special purpose circuit, software, firmware, logic, or any combination thereof. Some aspects may be implemented in hardware, while other aspects may be implemented in firmware or software which may be executed by a controller, microprocessor, or other computing devices. When aspects of the embodiments of the present disclosure are illustrated or described as a block diagram, a flowchart, or using some other graphical representations, it will be understood that the blocks, apparatuses, systems, techniques, or methods described herein may be implemented as non-limiting examples in hardware, software, firmware, a special purpose circuit or logic, general purpose hardware or controller or other computing devices, or some combinations thereof.

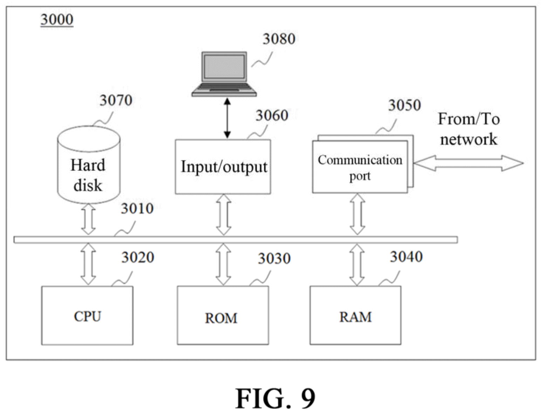

For example, the method or apparatus according to embodiments of the present disclosure may also be implemented with the aid of the architecture of the computing device 3000 shown in FIG. 9. As shown in FIG. 9, the computing device 3000 may include a bus 3010, one or more CPUs 3020, a read-only memory (ROM) 3030, a random access memory (RAM) 3040, a communication port 3050 connected to a network, an input/output component 3060, a hard disk 3070, and the like. The storage device in the computing device 3000, such as the ROM 3030 or the hard disk 3070, can store various data or files used for processing and/or communication of the network configuration method provided in the present disclosure and program instructions executed by the CPU. The computing device 3000 may also include a user interface 3080. Of course, the architecture shown in FIG. 9 is merely exemplary, and during implementation of different devices, one or more components in the computing device shown in FIG. 9 may be omitted according to actual needs.

According to yet another aspect of the present disclosure, a computer-readable storage medium is further provided. The computer storage medium has computer-readable instructions stored thereon. The computer-readable instructions, when executed by a processor, can execute the network configuration method according to the embodiments of the present disclosure described with reference to the drawings above. The computer-readable storage medium in the embodiments of the present disclosure may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example and not limitation, many forms of RAM are available, such as a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous linked dynamic random access memory (SLDRAM), and a direct memory bus random access memory (DR RAM). It should be noted that a memory of the method described herein is intended to include, but is not limited to, these and any other suitable types of memories. It should be noted that a memory of the method described herein is intended to include, but is not limited to, these and any other suitable types of memories.

An embodiment of the present disclosure provides a computer program product or computer program, where the computer program product or computer program includes computer instructions stored in a computer-readable storage medium. The processor of the computer device reads the computer instructions from the computer-readable storage medium, and the processor executes the computer instructions to cause the computer device to execute the network configuration method according to the embodiments of the present disclosure.

Embodiments of the present disclosure provide a network configuration method performed by a user device and a network configuration method performed by a speaker device.

In the method provided in the embodiments of the present disclosure, a Wi-Fi Direct connection is used for direct communication between speaker devices to form a Wi-Fi Direct group composed of all speaker devices, and a first speaker device is configured in the Wi-Fi Direct group as a group owner (GO) device to perform direct communication with the user device, where the direct communication employs a Bluetooth connection. Based on such a system design, the user device transmits network configuration information via the GO speaker device to other speaker devices for which network setup needs to be performed, for the other speaker devices to connect to a Wi-Fi network based on the network configuration information, thereby implementing a network configuration process for a plurality of speaker devices.

By combining Wi-Fi Direct connections and BLE for multi-speaker network configuration, including using Bluetooth connectivity for initial speaker device discovery and pairing between a GO speaker device and a user device, and using Wi-Fi Direct connections to enable a direct connection between speaker devices without the support of a central network infrastructure, the methods provided by the embodiments of the present disclosure implement efficient communication between the user device and the GO speaker device, as well as between the GO speaker device and other speaker devices in the speaker system. This includes implementing synchronization of speaker device information, sharing of network configuration information, and parallel processing of network connections, significantly improving speaker network configuration efficiency. At the same time, speaker devices also enjoy the convenience of joining or leaving the Wi-Fi Direct network at any time. Based on the network configuration method provided by the embodiments of the present disclosure, a user can configure Wi-Fi networks for multiple speaker devices at a time through user device (such as smartphone APP, etc.), which greatly simplifies and accelerates the network configuration process of speaker devices.

It should be noted that the flowcharts and block diagrams in the drawings illustrate possible architectures, functions, and operations of systems, methods, and computer program products according to various embodiments of the present disclosure. In this regard, each block in the flowcharts or block diagrams may represent a module, a program segment, or a portion of code, which contains at least one executable instruction for implementing a specified logical function. It should also be noted that, in some alternative implementations, the functions noted in the blocks may occur in an order other than that noted in the drawings. For example, two blocks shown in succession may actually be executed substantially in parallel, or they may sometimes be executed in the reverse order, depending on the functionality involved. It should be further noted that each block in the block diagrams and/or flowcharts and a combination of blocks in the block diagrams and/or flowcharts may be implemented by using a dedicated hardware-based system used for executing specified functions or operations, or may be implemented by using a combination of dedicated hardware and a computer instruction.

In general, various example embodiments of the present disclosure may be implemented in hardware or special purpose circuit, software, firmware, logic, or any combination thereof. Some aspects may be implemented in hardware, while other aspects may be implemented in firmware or software which may be executed by a controller, microprocessor, or other computing devices. When aspects of the embodiments of the present disclosure are illustrated or described as a block diagram, a flowchart, or using some other graphical representations, it will be understood that the blocks, apparatuses, systems, techniques, or methods described herein may be implemented as non-limiting examples in hardware, software, firmware, a special purpose circuit or logic, general purpose hardware or controller or other computing devices, or some combinations thereof.

The example embodiments of the present disclosure described in detail above are illustrative only and not restrictive. Those skilled in the art should understand that various modifications and combinations may be made to these embodiments or features thereof without departing from the principles and spirit of the present disclosure, and such modifications should fall within the scope of the present disclosure.

## Claims

1. A network configuration method performed by a user device, comprising:
establishing a Bluetooth connection with a first speaker device of a plurality of speaker devices, wherein the first speaker device is connected with each of other speaker devices of the plurality of speaker devices through a Wi-Fi Direct connection; and
transmitting Wi-Fi network configuration information to the first speaker device through the Bluetooth connection, wherein the first speaker device is connected to a Wi-Fi network based on the Wi-Fi network configuration information, and the first speaker device transmits the Wi-Fi network configuration information to one or more other speaker devices of the plurality of speaker devices through the Wi-Fi Direct connection, for the one or more other speaker devices to connect to the Wi-Fi network based on the Wi-Fi network configuration information.

2. The method according to claim 1, wherein in response to the first speaker device establishing the Bluetooth connection with the user device, the first speaker device enters a Group Owner mode and establishes the Wi-Fi Direct connection with each of the other speaker devices.

3. The method according to claim 1 or 2, wherein, prior to establishing the Bluetooth connection with the user device, the first speaker device enters a Group Owner mode in response to the first speaker device being preset, actively announcing, or being selected by the user device as a Group Owner, and establishes the Wi-Fi Direct connection with each of the other speaker devices.

4. The method according to claim 3, wherein the selection of the first speaker device as the Group Owner by the user device is based on actuation of a button on the first speaker device by a user.

5. The method according to any preceding claim, further comprising:
receiving device information of the plurality of speaker devices from the first speaker device through the Bluetooth connection, wherein the device information of the plurality of speaker devices comprises device information received by the first speaker device from the other speaker devices of the plurality of speaker devices through the Wi-Fi Direct connection; and
selecting, by a user, the one or more other speaker devices from the plurality of speaker devices for network setup based on the device information of the plurality of speaker devices,
wherein the Wi-Fi network configuration information comprises indication information of the one or more other speaker devices, and key information of a router associated with the Wi-Fi network.

6. A network configuration method performed by a first speaker device, comprising:
in response to a connection request from a user device, establishing a Bluetooth connection with the user device, wherein the first speaker device is connected with one or more speaker devices through a Wi-Fi Direct connection;
receiving Wi-Fi network configuration information from the user device through the Bluetooth connection, and connecting to a Wi-Fi network based on the Wi-Fi network configuration information; and
transmitting the Wi-Fi network configuration information to at least one speaker device of the one or more speaker devices through the Wi-Fi Direct connection, for the at least one speaker device to connect to the Wi-Fi network based on the Wi-Fi network configuration information.

7. The method according to claim 6, further comprising:
in response to the first speaker device establishing the Bluetooth connection with the user device, the first speaker device entering a Group Owner mode and establishing a Wi-Fi Direct connection with each of the one or more speaker devices.

8. The method according to claim 6 or 7, further comprising:
prior to establishing the Bluetooth connection with the user device, the first speaker device entering a Group Owner mode in response to the first speaker device being preset, actively announcing, or being selected by the user device as a Group Owner, and establishing a Wi-Fi Direct connection with each of the one or more speaker devices.

9. The method according to claim 7 or 8, wherein the first speaker device establishes the Wi-Fi Direct connection with the one or more speaker devices by:
registering one or more services for the one or more speaker devices to find the first speaker device through a service discovery process;
receiving a connection request from the one or more speaker devices through the service discovery process; and
establishing the Wi-Fi Direct connection with the one or more speaker devices in response to the connection request.

10. The method according to any of claims 7 to 9, wherein any speaker device of the one or more speaker devices stops Bluetooth advertising after being connected to the Wi-Fi network.

11. The method according to claim 10, wherein any speaker device of the one or more speaker devices stops Bluetooth advertising after establishing the Wi-Fi Direct connection with the first speaker device.

12. The method according to any of claims 6 to 11, further comprising:
receiving device information of the one or more speaker devices from the one or more speaker devices through the Wi-Fi Direct connection;
transmitting the device information of the one or more speaker devices to the user device through the Bluetooth connection.

13. The method according to any of claims 6 to 12, further comprising:
when any speaker device of the one or more speaker devices has connected to the Wi-Fi network, disconnecting the Wi-Fi Direct connection with the speaker device.
